# EUROPÄISCHE PATENTSCHRIFT

(11) **EP 3 227 712 B1**
(45) Veröffentlichungstag und Bekanntmachung des Hinweises auf die Patenterteilung: **24.07.2019**
(21) Anmeldenummer: 15749724.9
(22) Anmeldetag: 13.08.2015
(51) Int. Cl.: G01S 7/40, G01S 13/93, G01S 7/02

(54) **VERFAHREN ZUM KONFIGURIEREN WENIGSTENS EINES AN EINER VON MEHREREN EINBAUPOSITIONEN IN EINEM KRAFTFAHRZEUG VERBAUTEN RADARSENSORS HINSICHTLICH DER EINBAUPOSITION UND KRAFTFAHRZEUG**
METHOD FOR CONFIGURING AT LEAST ONE BUILT-IN RADAR SENSOR IN A MOTOR VEHICLE ON ONE OF SEVERAL MOUNTING POSITIONS WITH RESPECT TO THE MOUNTING POSITION AND MOTOR VEHICLE
PROCÉDÉ PERMETTANT DE CONFIGURER QUANT À SA POSITION DE MONTAGE AU MOINS UN CAPTEUR RADAR INSTALLÉ DANS UNE DE PLUSIEURS POSITIONS DE MONTAGE DANS UN VÉHICULE AUTOMOBILE, ET VÉHICULE AUTOMOBILE

(30) Priorität: 04.12.2014 DE 102014017917
(43) Veröffentlichungstag der Anmeldung: 11.10.2017
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2015/001665
(87) Internationale Veröffentlichungsnummer: WO 2016/087010

(56) Entgegenhaltungen:
- WO-A1-2005/078475
- DE-A1- 10 138 001
- DE-A1-102006 025 174

## Beschreibung

Die Erfindung betrifft ein Verfahren zum Konfigurieren wenigstens eines an einer von mehreren Einbaupositionen in einem Kraftfahrzeug verbauten Radarsensors hinsichtlich der Einbauposition sowie ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Dabei detektiert ein Radarsensor Objekte im Umfeld des Kraftfahrzeugs zunächst in seinem eigenen Sensorkoordinatensystem, wobei jedoch für die die Radardaten nutzenden Fahrzeugsysteme, insbesondere Fahrerassistenzsysteme, Objektinformationen relativ zum Kraftfahrzeug, also im Fahrzeugkoordinatensystem, relevant sind. Beispielsweise kann basierend auf den Radardaten eine Kollisionswahrscheinlichkeit ermittelt werden und/oder es können Warnungen und/oder Hinweise an den Fahrer ausgelöst werden. Daher bedarf es einer Transformation zwischen dem Sensorkoordinatensystem und dem Fahrzeugkoordinatensystem, wofür dem Radarsensor seine relative Einbauposition im Kraftfahrzeug bekannt sein muss. Dabei ist es im Stand der Technik bekannt, die relative Einbauposition des Sensors im Kraftfahrzeug in der Sensor-Software, insbesondere einer Auswertungssoftware, zu kodieren. Das bedeutet, Radarsensoren werden mit einer auf eine spezielle Einbauposition im Kraftfahrzeug abgestimmten Auswertungssoftware hergestellt.

Geht man beispielsweise von einer Konfiguration aus, in der acht an verschiedenen Einbaupositionen im Kraftfahrzeug zu verbauende Radarsensoren für die 360°-Umfelderfassung verwendet werden, muss jeweils eine Auswertungssoftware für alle der acht Einbaupositionen erzeugt werden. Jeder Radarsensor hat seine eigene Auswertungssoftware bzw. eine eigene Software-Teilenummer.

Die Steuerung, Verwaltung und Überwachung aller Software-Teilnummern ist äußerst kosten- und zeitintensiv. Hierzu kommt, dass die Wahrscheinlichkeit eines Falschverbaus existiert, insbesondere, wenn in der Produktion acht unterschiedliche Radarsensoren (mit unterschiedlichen Software-Teilnummern) in acht unterschiedlichen festgelegten Einbaupositionen verbaut werden müssen. Auch später beim Austausch der defekten Radarsensoren soll auf die richtige Software-Teilenummer und die zugehörige Einbauposition geachtet werden.

DE 10 2006 025 174 A1 offenbart eine Vorrichtung und ein Verfahren zum Ermitteln der Sensorposition von Sensoreinheiten eines Fahrerassistenzsystems. Sensoreinheiten weisen eine Mehrzahl von Anschlüssen unterschiedlicher Ordnungspositionen auf und werden mit einem Datenbus über einen oder mehrere Anschlüsse nach einem bestimmten Verbindungsschema verbunden, das bei jeder der Sensoreinheiten unterschiedlich ist, um somit eine Identitätserkennung für die Sensorposition einer Sensoreinheit bereitzustellen.

Der Erfindung liegt daher die Aufgabe zugrunde, eine aufwandsarme Möglichkeit anzugeben, eine Konfiguration von gleich ausgebildeten Radarsensoren für verschiedene Einbaupositionen in einem Kraftfahrzeug zu erlauben.

Zur Lösung dieser Aufgabe ist bei einem Verfahren der eingangs genannten Art erfindungsgemäß vorgesehen, dass an jeder Einbauposition wenigstens eine einbaupositionsspezifische, von dem verbauten Radarsensor erfassbare Identifikationsstruktur vorgesehen wird, wobei die Konfiguration des Radarsensors in Abhängigkeit von die Identifikationsstruktur beschreibenden Radardaten erfolgt.

Der Erfindung liegt mithin die Idee zugrunde, in der Umgebung der Einbaupositionen, derart angeordnet, dass sie von den verbauten Radarsensoren detektiert werden können, wenigstens für einen Teil der Einbaupositionen einbaupositionsspezifische Identifikationsstrukturen vorzusehen. Ist der Radarsensor eingebaut und in Betrieb genommen, empfängt er Reflexionen von diesen Identifikationsstrukturen, erhält mithin Radardaten, die die Identifikationsstruktur beschreiben, wobei die Identifikationsstrukturen selbstverständlich in den Radardaten unterscheidbar sind. Mögliche Identifikationsstrukturen können dabei, worauf im Folgenden noch näher eingegangen werden wird, zweckmäßigerweise im Radarsensor bereits bekannt sein, so dass die Radardaten der Identifikationsstruktur leicht ausgewertet werden können. Sie stellen dann die Grundlage für die Konfiguration, also eine Art Kodierung, dar. Diese kann dann zur korrekten Konfiguration des Radarsensors genutzt werden, nachdem die Identifikationsstruktur die Einbauposition beschreibt. Ist dem Radarsensor erst seine relative Einbauposition zum Fahrzeugkoordinatensystem bekannt, kann er im weiteren Betrieb seine detektierten Objektinformationen leicht in das Fahrzeugkoordinatensystem umrechnen.

Auf diese Weise ist es also möglich, hardware- und softwaretechnisch gleich ausgestattete Radarsensoren für alle Einbaupositionen zu verwenden. Mit anderen Worten bedeutet dies, dass alle Radarsensoren eine einzige Hardware- und Software-Teilenummer aufweisen, so dass die Handhabung von mehreren Teilenummern entfällt. Hieraus resultiert eine Reduzierung des Aufwands in der Produktion und der Kosten für die Radarsensoren. Ferner ist eine Reduzierung des Aufwands (Fertigungszeit) bei der Montage der Radarsensoren in der Fahrzeugproduktion gegeben. Die Zahl der Sensor-Versionen (Hardware und Software) ist reduziert.

Auf diese Weise wird auch das Risiko zum Falschverbau von Radarsensoren deutlich reduziert, nachdem alle Radarsensoren für alle Einbaupositionen grundsätzlich geeignet sind. Auch bei einem Umtausch ist es möglich, die neuen Radarsensoren unmittelbar auf ihre neue Einbauposition zu konfigurieren, nachdem der Radarsensor aktiviert wurde und Radardaten der Identifikationsstruktur aufnehmen kann. Ein mehrmaliges oder erneutes Flashen aller Sensoren entfällt, nachdem insbesondere die Auswertungssoftware oder allgemein die Softwaremodule aller Radarsensoren identisch sind.

Dies reduziert im Übrigen auch den Testaufwand beim Hersteller der Radarsensoren im Vergleich zu einer Version mit unterschiedlichen Softwareversionen und somit unterschiedlichen Software-Teilenummern. Auch der Umfang bzw. Aufwand für den Freigabeprozess bzw. die Absicherung in der Entwicklung ist reduziert, nachdem es nur eine Variante von Radarsensoren gibt.

Insgesamt lässt sich das Verfahren äußerst aufwandsarm und auch robust in der Durchführung realisieren, nachdem nur entsprechende Identifikationsstrukturen am Kraftfahrzeug vorgesehen werden. Bleiben diese Identifikationsstrukturen auch zwischen unterschiedlichen Kraftfahrzeugen bzw. unterschiedlichen Kraftfahrzeugmodellen gleich, und erfolgt die Konfiguration des Sensors über ein Steuergerät, beispielsweise das Steuergerät eines zentralen Fahrerassistenzsystems, muss auch für unterschiedliche Fahrzeugmodelle keine unterschiedliche Software generiert werden, nachdem die kraftfahrzeugspezifischen Änderungen im zentralen Steuergerät vorliegen, welches entsprechend Konfigurationsparameter für die Auswertungssoftware oder gar eine spezielle Version der Auswertungssoftware für den Radarsensor zur Verfügung stellen kann, welcher im Hinblick auf die Software nicht verändert werden muss.

Eine besonders vorteilhafte Ausgestaltung der vorliegenden Erfindung sieht vor, dass die Identifikationsstruktur durch eine Nebenkeule des Radarsensors erfasst wird. Auf diese Weise müssen die Identifikationsstrukturen nicht in Hauptabstrahlrichtung des Radarsensors (Hauptkeule) platziert werden, so dass die Performance des Radarsensors nicht beeinträchtigt wird. Die Identifikationsstrukturen werden so angeordnet, dass sie im Randbereich des Abstrahldiagramms, also im Bereich von Nebenkeulen (side lobes) liegen. Dann sind sie zwar, insbesondere, wenn gezielt nach ihnen gesucht wird, problemlos erfassbar, es ist jedoch keine Einschränkung des durch die Hauptkeule definierten Erfassungsbereichs des Radarsensors notwendig.

Selbstverständlich ist es in anderen Ausführungsformen grundsätzlich auch denkbar, dass die Identifikationsstruktur wenigstens teilweise durch einen Randbereich einer Hauptkeule des Radarsensors erfasst wird, was jedoch aus den genannten Gründen weniger bevorzugt wird.

Die Identifikationsstruktur kann als ein vorbestimmte Reflexionseigenschaften aufweisendes Merkmal und/oder eine Anordnung von in den Radardaten auffindbaren, insbesondere nach einem vorbestimmten Muster angeordneten Merkmalen ausgebildet sein. Dabei kann das Merkmal beispielsweise als eine Rippenstruktur und/oder eine sonstige Oberflächenstruktur an einem durch den Radarsensor erfassbaren Teil und/oder als eine Diskontinuität eines erfassbaren Teils und/oder durch eine Formgebung eines erfassbaren Teils, beispielsweise eine L-Form, realisiert sein. Auch denkbar sind bestimmte andere Oberflächenausgestaltungen bzw. Strukturen als Merkmale, beispielsweise bestimmte konkave oder konvexe Formen, Kanten, Ecken, periodische Strukturen oder dergleichen. In diesem Fall enthalten die Radardaten zweckmäßigerweise die entsprechenden festgestellten Reflexioneigenschaften (Reflexionscharakteristiken) des Merkmals, wodurch unterschiedliche Merkmale und mithin unterschiedliche Identifikationsstrukturen unterschieden werden können.

Nachdem die Identifikationsstruktur bevorzugt im Bereich einer Nebenkeule des Radarsensors angeordnet ist, sind jedoch gegebenenfalls die Radardaten des Merkmals qualitativ weniger hochwertig, was deutliche Unterschiede in den Reflexionseigenschaften bedingt, um unterschiedliche Identifikationsstrukturen anhand solcher einzelner Merkmale unterscheiden zu können. Mithin ist es erfindungsgemäß bevorzugt, eine Anordnung von Merkmalen zu verwenden, die beispielsweise bestimmte geometrische Muster als Art einer Kodierung widerspiegeln. Dann ist es ausreichend, festzustellen, an welchen Positionen Merkmale der Identifikationsstrukturen, die anhand des festgestellten Abstands leicht identifiziert werden können, vorliegen, so dass die Radardaten in einem solchen Fall bevorzugt die Positionen von einzelnen Merkmalen der Identifikationsstruktur enthalten.

In diesem Kontext sieht eine besonders bevorzugte Ausführungsform vor, dass verschiedene Einbaupositionen über das Vorhandensein von einzelnen Merkmalen des vorbestimmten Musters identifiziert werden. In diesem Fall ist mithin das vorbestimmte Muster in dem Radarsensor und/oder einem bereits erwähnten Steuergerät des Kraftfahrzeugs bereits bekannt. Die Anzahl möglicher Kodierungen durch ein solches vorbestimmtes Muster ergibt sich durch zwei hoch der Anzahl der Merkmale in dem vorbestimmten Muster, nach dem die Merkmale angeordnet sind. Beispielsweise kann ein vorbestimmtes Muster mit maximal vier Merkmalen, die durch den Radarsensor, bevorzugt seine Nebenkeulen detektiert werden können, verwendet werden. Dann ergibt sich eine konkrete Ausgestaltung einer Identifikationsstruktur, in der keine Merkmale vorhanden sind, es ergeben sich ferner vier Ausgestaltungen der Identifikationsstruktur, in der jeweils nur eines der Merkmale des vorbestimmten Musters vorhanden ist, es ergeben sich sechs konkrete Ausgestaltungen des Identifikationsmusters, in denen zwei der vier Merkmale des vorbestimmten Musters enthalten sind, ferner liegen vier konkrete Ausgestaltungen des Identifikationsmusters vor, in denen drei der Merkmale vorhanden sind und zuletzt eine konkrete Ausgestaltung, in der alle vier Merkmale des vorbestimmten Musters enthalten sind, so dass sich insgesamt sechzehn Einbaupositionen anhand eines solchen vorbestimmten Musters, das eine Anordnung von Merkmalen beschreibt, realisieren lassen. Zusammenfassend bedeutet dies, dass ein vorbestimmtes Muster von Merkmalen, also eine vorbestimmte Anordnung von Merkmalen, vorgegeben wird, wobei die Identifikationsstrukturen bevorzugt aller Einbaupositionen jeweils unterschiedliche Merkmale des vorbestimmten Musters realisieren. Die Radardaten des Radarsensors müssen dann nur gegen das vorbestimmte Muster überprüft werden, um zu wissen, welche der zwei hoch n Kodierungen an der aktuellen Einbauposition vorliegt, wobei n die Zahl der Merkmale in dem vorbestimmten Muster angibt. Wird beispielsweise ein vorbestimmtes Muster mit vier in einem Rechteck angeordneten Merkmalen verwendet, können diese beispielsweise durch die Radarsensoren rechts oben, links oben, rechts unten und links unten, bevorzugt durch entsprechende Nebenkeulen, erfassbar sein. Diese Erwartungshaltung vereinfacht es, die Radardaten bezüglich der Identifikationsstruktur auszuwerten und lässt es auf einfache Weise zu, verschiedene Kodierungen an den Einbaupositionen zu realisieren, die dem vorgegebenen Muster folgen. Letztlich wird also eine Kombinatorik genutzt, um unterschiedliche Identifikationsstrukturen an unterschiedlichen Einbaupositionen einem vorbestimmten Muster folgend einfach detektierbar bzw. auswertbar vorzusehen.

Bei in einem Stoßfänger befindlichen Einbaupositionen hat es sich als vorteilhaft erwiesen, die Merkmale an dem Stoßfänger auszubilden, insbesondere als in einen Erfassungsbereich oder eine Nebenkeule des Radarsensors einragende Profilabschnitte des Stoßfängers. Ist beispielsweise der Radarsensor an einem zum Fahrzeuginneren gewandten Teil des Stoßfängers ("Schließteil") zu befestigen, kann das wenigstens eine Merkmal aus dem inneren Teil selbst hervorragen und sich in den Bereich einer Nebenkeule des Radarsensors erstrecken. Es ist jedoch auch denkbar, in einem solchen Fall Merkmale an einem äußeren Teil des Stoßfängers vorzusehen, dass beabstandet von dem inneren Teil vorliegt.

Denkbar ist es ferner auch, dass die Merkmale an einer Halterung für den Radarsensor ausgebildet sind, wobei es durchaus möglich ist, dass die Halterung selbst aus dem Stoßfänger gebildet ist, beispielsweise bei Verwendung von Gussteilen.

Unabhängig davon, ob die Merkmale an einem Stoßfänger und/oder einer Halterung, die selbst Teil des Stoßfängers sein kann, ausgebildet sind, ist es sowohl denkbar, beispielsweise durch entsprechende Gussteile, die Merkmale aus demselben Material/Bauteil zu formen, so dass der Stoßfänger/die Halterung letztlich mit dem Merkmal gefertigt werden können. Möglich ist es jedoch auch, Merkmale nachträglich an dem Stoßfänger bzw. der Halterung anzubringen, beispielsweise durch Aufkleben und/oder sonstige Befestigungsvarianten. Dabei können beispielsweise strukturierte, die Radarstrahlung reflektierende Folien und/oder sonstige Zusatzelemente, die bevorzugt aus Bauraumgründen dünn ausgebildet sind, an dem Stoßfänger und/oder der Halterung befestigt werden. Als Zusatzelement sind auch periodische Folienstrukturen, Matrix-Formteile und dergleichen denkbar; wesentlich ist nur, dass die Zusatzelemente, wie beschrieben, durch den Radarsensor, bevorzugt eine Nebenkeule, erfassbar sind.

Wie bereits erwähnt, können zusammenfassend die Radardaten also eine Reflexionseigenschaft des Merkmals und/oder eine Position des Merkmals und/oder eine Anordnung mehrerer Merkmale der Identifikationsstruktur umfassend bestimmt werden, wobei die bevorzugte Ausgestaltung der Erfindung unter Verwendung des vorbestimmten Musters auf die Position der Merkmale bzw. deren Anordnung im Vergleich zum vorbestimmten Muster abzielt.

Wie bereits angedeutet wurde, sieht eine Ausgestaltung der Erfindung vor, dass eine Steuereinrichtung des Radarsensors die Radardaten zur Auswahl einer zu verwendenden Version und/oder zur Konfiguration einer Auswertungssoftware auswertet und/oder die Radardaten an ein Steuergerät des Kraftfahrzeugs übermittelt werden. In einer weniger bevorzugten Ausgestaltung der vorliegenden Erfindung ist also die Steuereinrichtung des Radarsensors selbst bereits in der Lage, den Radarsensor geeignet zum Betrieb in der Einbauposition zu konfigurieren, indem die Radardaten der Identifikationsstruktur gleich vor Ort ausgewertet werden und genutzt werden, um eine entsprechende Version der Auswertungssoftware auszuwählen und/oder die Auswertungssoftware auf die Einbauposition im Kraftfahrzeug zu konfigurieren. In dieser Ausgestaltung sind die Radarsensoren letztlich noch spezifisch für ein bestimmtes Modell eines Kraftfahrzeugs, da die korrekten Einbaupositionen im Radarsensor selbst vorliegen müssen. Werden die die Einbaupositionen im Kraftfahrzeug beschreibenden Konfigurationsparameter jedoch von extern, beispielsweise durch ein zentrales Steuergerät, geliefert, was in der folgenden Ausgestaltung näher beschrieben werden soll, lassen sich die Radarsensoren letztlich für beliebige Kraftfahrzeugmodelle einsetzen. Nichtsdestotrotz kann es auch dann, wenn die Steuereinrichtung selbst die Konfiguration des Radarsensors auf die Einbauposition vornimmt, zweckmäßig sein, Radardaten an ein Steuergerät des Kraftfahrzeugs zu übermitteln, da jenes dann wenigstens eine Eigenkonfiguration, insbesondere bezüglich einer vorgehaltenen Liste von aktiven Radarsensoren, aufgrund der Radardaten vornehmen kann. Ein neuer Radarsensor kann sich auf diese Art und Weise mit der festgestellten Einbauposition beim Steuergerät anmelden, was selbstverständlich auch dann zweckmäßig ist, wenn die Auswertung der Radardaten und die Konfiguration bzw. das zur Verfügung stellen von Auswertungssoftware und/oder Konfigurationsparametern seitens des Steuergeräts erfolgt.

Besonders bevorzugt ist es also, wenn das Steuergerät nach Auswertung der Radardaten eine zu verwendende Version der Auswertungssoftware und/oder Konfigurationsparameter, insbesondere die Einbauposition des Radarsensors beschreibende Konfigurationsparameter, für die Auswertungssoftware an den Radarsensor zurückübermittelt. Die Radardaten, die die Identifikationsstruktur beschreiben und mithin eine Art Kodierung darstellen, werden mithin an ein Steuergerät des Kraftfahrzeugs übermittelt, beispielsweise das Steuergerät eines zentralen Fahrerassistenzsystems. Dies dient nicht nur dem Zweck, dass sich der Radarsensor aktiv meldet, sondern in dem Steuergerät kann beispielsweise auch eine Look-Up-Tabelle hinterlegt sein, die verschiedenen Identifikationsstrukturen bestimmte Einbaupositionen im Kraftfahrzeug zuordnet. Abhängig davon kann die geeignete Version der Auswertungssoftware ausgewählt werden und/oder, was bevorzugt ist, es können geeignete Konfigurationsparameter, die die Einbauposition im Kraftfahrzeug beschreiben, anhand der Look-Up-Tabelle ermittelt werden und entsprechend an den Radarsensor zurückübermittelt werden, so dass eine korrekte Transformation aus dem Sensorkoordinatensystem in das Fahrzeugkoordinatensystem erfolgen kann.

Die Einbaupositionen (und somit dort verbaute Radarsensoren) können auf verschiedene Art und Weise, mithin in verschiedenen Topologien, an das Steuergerät angeschlossen sein. Beispielsweise ist es denkbar, dass alle Einbaupositionen über eine gemeinsame Leitung, insbesondere einen gemeinsamen Bus, beispielsweise einen CAN-Bus, mit dem Steuergerät verbunden sind, es ist jedoch auch möglich, dass nur ein Teil der Einbaupositionen über jeweils eine eigene Leitung, insbesondere einen Bus, beispielsweise einen CAN-Bus, mit dem Steuergerät verbunden wird. Liegen beispielsweise acht Einbaupositionen für acht Radarsensoren vor, ist es möglich, zwei CAN-Busse für jeweils vier der Einbaupositionen zu verwenden, so dass das Steuergerät letztlich zwei CAN-Schnittstellen für die entsprechenden Leitungen aufweist. In einer solchen Ausgestaltung ist es denkbar, dass bei einem Anschluss von Radarsensoren jeweils eines Teils der Einbaupositionen über eine Leitung, insbesondere einen Bus, an das Steuergerät und einer steuergeräteseitigen Ermittlung der Version der Auswertungssoftware und/oder der Konfigurationsparameter für die Auswertungssoftware die Identifikationsstrukturen nur bezüglich einer der Leitungen einmalig sind. Das bedeutet, nachdem das Steuergerät weiß, von welcher Leitung Radardaten zu einer Identifikationsstruktur stammen, können auch gleiche Identifikationsstrukturen an Einbaupositionen unterschiedlicher Leitungen eingesetzt werden und es kann dennoch eine korrekte Identifizierung der Einbauposition erfolgen. Beispielsweise kann in dem Fall, in dem über getrennte Leitungen zwei Mal vier Radarsensoren bzw. Einbaupositionen mit dem Steuergerät verbunden sind, ein vorbestimmtes Muster gewählt werden, das eine 2Bit-Kodierung für die Einbaupositionen erlaubt.

Neben dem Verfahren betrifft die Erfindung auch ein Kraftfahrzeug mit mehreren Einbaupositionen für Radarsensoren, wobei an jeder Einbauposition wenigstens eine einbaupositionsspezifische, von den an der jeweiligen Einbauposition verbauten Radarsensoren erfasste Identifikationsstruktur vorgesehen ist, wobei eine Steuereinrichtung der Radarsensoren und/oder ein Steuergerät des Kraftfahrzeugs zur Konfiguration der Radarsensoren bezüglich der Einbauposition in Abhängigkeit von eine jeweilige Identifikationsstruktur beschreibenden Radardaten ausgebildet ist. Sämtliche Ausführungen bezüglich des erfindungsgemäßen Verfahrens lassen sich analog auf das erfindungsgemäße Kraftfahrzeug übertragen, mit welchem mithin auch die bereits genannten Vorteile erhalten werden können.

Insbesondere lassen sich die beschriebenen Ausbildungen der Identifikationsstrukturen, insbesondere also eine Anordnung von Merkmalen nach einem vorbestimmten Muster, auf das erfindungsgemäße Kraftfahrzeug übertragen, wo sie mithin auch realisierbar sind. Bevorzugt erfolgt ferner die Anordnung der Identifikationsstrukturen derart, dass sie von wenigstens einer Nebenkeule des Radarsensors erfasst werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: die Verbindung von Radarsensoren mit einem Steuergerät,
- Fig. 3: eine erste Möglichkeit zur Realisierung von Identifikationsstrukturen in einem Stoßfänger,
- Fig. 4: eine zweite Möglichkeit zur Realisierung von Identifikationsstrukturen in einem Stoßfänger,
- Fig. 5: eine dritte Möglichkeit zur Realisierung von Identifikationsstrukturen in einer Halterung,
- Fig. 6: ein vorbestimmtes Muster von Merkmalen zur Realisierung von Identifikationsstrukturen,
- Fig. 7: die Abbildung von verschiedenen Identifikationsstrukturen eines vorbestimmten Musters auf Kodierungen,
- Fig. 8: einen Ablaufplan des erfindungsgemäßen Verfahrens und
- Fig. 9: eine weitere Möglichkeit zur Verbindung von Radarsensoren mit einem Steuergerät.

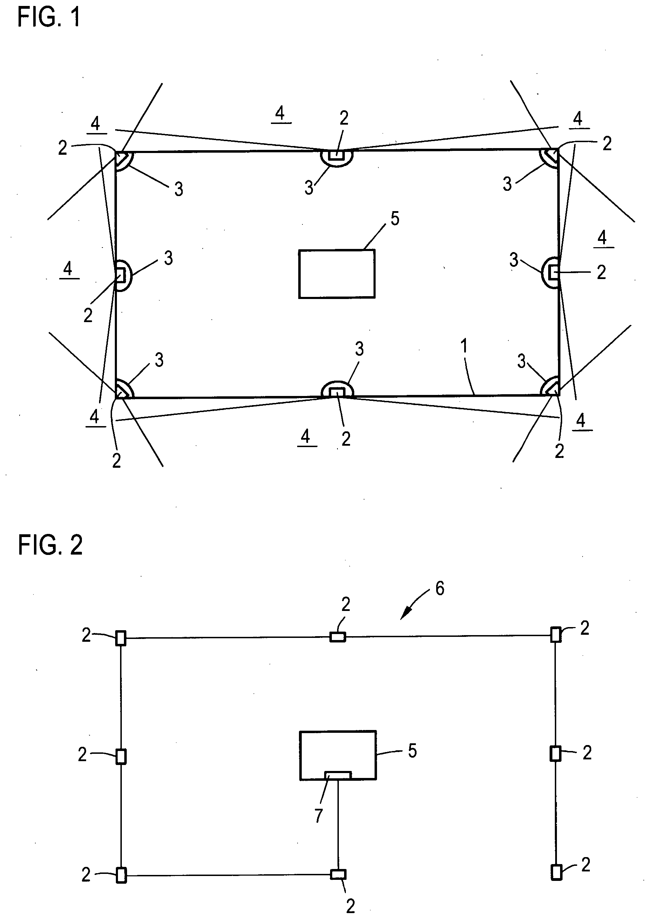

Fig. 1 zeigt eine Prinzipskizze eines erfindungsgemäßen Kraftfahrzeugs 1. Dieses weist acht Radarsensoren 2 auf, die an entsprechenden Einbaupositionen 3 im Kraftfahrzeug 1 verbaut sind. Wie die angedeuteten Erfassungsbereiche 4 der Radarsensoren zeigen, ist mit der gezeigten Anordnung eine 360°-Umfelderfassung mittels der Radarsensoren 2 möglich. Der Betrieb der Radarsensoren 2 wird von einem zentralen Steuergerät 5 überwacht und gesteuert, welches vorliegend das Steuergerät eines zentralen Fahrerassistenzsystems ist, mithin auch die Sensordaten der Radarsensoren 2 entgegennimmt und auswertet. Dabei ist es seitens des Steuergeräts 5 gewünscht, dass die Radardaten der Radarsensoren 2 Objekte bereits im Koordinatensystem des Kraftfahrzeugs 1, welches beispielsweise durch einen ausgezeichneten Punkt des Kraftfahrzeugs definiert sein kann, wiedergibt; das bedeutet, die Radardaten werden als vorausgewertete Objektlisten an das Steuergerät 5 übertragen, wobei die in den Objektlisten enthaltenen Positionsdaten sich bereits auf das Koordinatensystem des Kraftfahrzeugs 1 beziehen. Das bedeutet, die Radarsensoren 2 müssen hinsichtlich ihrer speziellen Einbauposition 3, also der relativen Position im Kraftfahrzeug 1, konfiguriert werden. Hierfür sind, was in Fig. 1 der Übersichtlichkeit halber noch nicht gezeigt ist, an den Einbaupositionen 3 Identifikationsstrukturen vorgesehen, die durch die Nebenkeulen der Radarsensoren 2 erfasst werden können. Radardaten der Identifikationsstrukturen lassen eine wenigstens für einen Teil der Einbaupositionen 3 eindeutige Identifikation der Einbauposition 3 zu, wie im Folgenden noch näher dargestellt werden soll.

Die Radarsensoren 2 sind allesamt sowohl was die Hardware als auch was die Software betrifft gleich ausgebildet, haben also insbesondere dieselbe Teilenummer. Die Konfiguration auf die Einbauposition 3, auch hinsichtlich des Modells des Kraftfahrzeugs 1, erfolgt durch Erfassung der Identifikationsstruktur und zur Verfügung Stellen geeigneter Konfigurationsparameter für die Auswertungssoftware seitens des Steuergeräts 5.

Fig. 2 zeigt eine erste mögliche Verbindung der Radarsensoren 2 mit dem Steuergerät 5, wobei vorliegend sämtliche Radarsensoren 2 über einen einzigen CAN-Bus 6 mittels einer Schnittstelle 7 an das Steuergerät 5 angebunden sind. Das bedeutet, um alle Einbaupositionen 3 eindeutig zu kodieren, müssen acht verschiedene, einbaupositionsspezifische Identifikationsstrukturen an den Einbaupositionen vorgesehen sein.

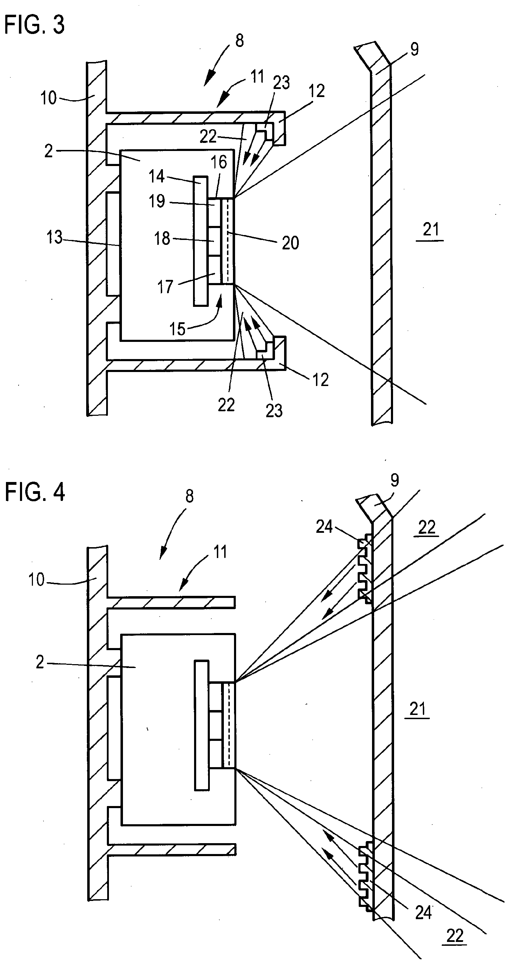

Fig. 3 zeigt eine erste Möglichkeit zur Realisierung einer Identifikationsstruktur bei einem an einer Einbauposition 3 im Inneren eines Stoßfängers 8 verbauten Radarsensor 2. Der Stoßfänger umfasst ein äußeres Stoßfängerteil 9 und ein mit diesem zusammengesetztes inneres Stoßfängerteil 10 (Schließteil), die vorliegend beide als Gussteile aus Kunststoff ausgebildet sind. Aus dem inneren Stoßfängerteil 10 ist eine Halterung 11 für den Radarsensor 2 ausgebildet, die vorwiegend um über den Radarsensor 2 hinausstehende L-Formen 12 erweitert ist.

Der Radarsensor 2 ist vorliegend als kleinbauender, auf CMOS-Technologie basierender Radarsensor 2 realisiert, umfasst mithin eine in einem Gehäuse 13 gehalterte Leiterplatte 14, auf der ein Package 15 in CMOS-Technologie realisiert ist, welches zum einen einen CMOS-Chip 16 umfasst, durch den ein Radar-Transceiver 17, eine digitale Signalverarbeitungskomponente 18 und eine Steuereinrichtung 19 des Radarsensors 2 realisiert sind. Das Package 15 umfasst ferner eine als Patchantenne realisierte Antennenanordnung 20.

Über die Antennenanordnung 20 können Radarsignale ausgesendet und wieder empfangen werden. Der eigentliche Erfassungsbereich des Radarsensors 2 wird dabei über die sogenannte Hauptkeule 21 definiert, während die Abstrahlcharakteristik jedoch auch Nebenkeulen 22 enthält, aus denen ebenso (üblicherweise störende und zu entfernende) Radardaten empfangen werden können.

Vorliegend wird das Vorhandensein der Nebenkeulen 22 jedoch vorteilhaft zum Erfassen der Identifikationsstruktur genutzt, die vorliegend durch eine Oberflächenstruktur 23 der L-förmigen Profilabschnitte 12 des inneren Stoßfängerteils 10 bzw. der Halterung 11 realisiert ist. Die Oberflächenstruktur 23 bildet ein Merkmal der Identifikationsstruktur, welches bestimmte Reflexionseigenschaften hat, die durch die Radardaten aus den Nebenkeulen 22 genauso beschrieben werden wie die Position bzw. Anordnung der Oberflächenstrukturen 23 als Merkmale.

Mit anderen Worten ist der Radarsensor 2 ausgebildet, insbesondere nach seiner Inbetriebnahme, gezielt aus den Nebenkeulen 22 Radardaten zu der Identifikationsstruktur, die hier aus den Merkmalen der Oberflächenstrukturen 23 besteht, aufzunehmen.

Es ist auch ein Ausführungsbeispiel denkbar, in dem die Steuereinrichtung 10 des Radarsensors 2 bereits ausgebildet ist, Radardaten des Merkmals auszuwerten, um den Radarsensor 2 bereits entsprechend zu konfigurieren, was jedoch voraussetzt, dass dem Radarsensor 2 die Zuordnung von Identifikationsstrukturen zu Einbaupositionen 3 bekannt ist. Bevorzugt ist es, um die Radarsensoren 2 auch in unterschiedlichen Fahrzeugmodellen anwenden zu können, die Zuordnung von durch Radardaten beschriebenen Identifikationsstrukturen zu Einbaupositionen 3 jedoch im Steuergerät 5 zu hinterlegen, an das die Radardaten dann zu übermitteln sind, worauf im Folgenden noch näher eingegangen werden wird.

Die Identifikationsstrukturen, die in der Ausgestaltung gemäß Fig. 3 geschaffen werden, können sich aufgrund ihrer Reflexionseigenschaften unterscheiden und somit Einbaupositionen kennzeichnen. Es ist jedoch auch denkbar, dass allein das Vorhandensein oder nicht Vorhandensein der durch die L-förmigen Profilabschnitte 12 mit der Oberflächenstruktur 23 gebildeten Merkmale in einem vorbestimmten Muster eine Kodierung einer Einbauposition 3 wiedergibt, wie im Folgenden noch näher erläutert werden soll. In einem solchen Fall ist es im Übrigen ausreichend, wenn die Position, an der das Merkmal der Identifikationsstruktur festgestellt wurde, in den Radardaten enthalten ist, oder gar bereits die Anordnung einzelner Merkmale der Identifikationsstruktur, die auf der Grundlage des vorbestimmten Musters vorhanden sein können.

Fig. 4 zeigt eine weitere Ausführungsform zur Realisierung von Identifikationsstrukturen in einem Stoßfänger 8, wobei der Einfachheit halber gleiche Bezugszeichen für entsprechende Merkmale verwendet wurden. Vorliegend ist die Identifikationsstruktur am äußeren Stoßfängerteil 9 ausgebildet, und zwar als dort befestigtes, beispielsweise aufgeklebtes, Strukturelement 24 im Bereich der Nebenkeulen 22 des Radarsensors 2. Auch in diesem Fall kann selbstverständlich mit bestimmten Anordnungen der als Merkmale der Identifikationsstruktur wirkenden Strukturelemente 24 gearbeitet werden oder deren Reflexionseigenschaften können bereits identitätsstiftend sein.

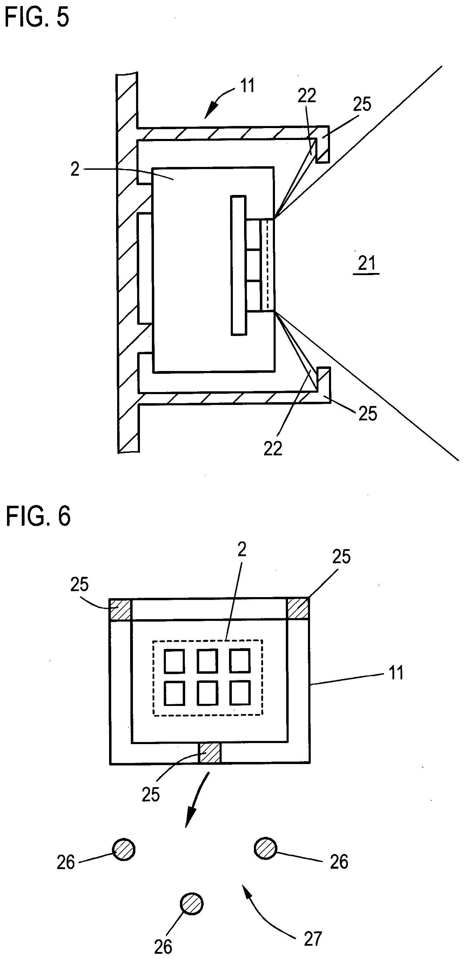

Bei Radarsensoren 2, die an nicht innerhalb von Stoßfängern 8 gelegenen Einbaupositionen 3 verbaut sind, bietet es sich allgemein an, die Identifikationsstrukturen an bzw. aus der entsprechenden Halterung auszubilden, wie anhand der Fig. 5 nochmals näher gezeigt ist, bei der allerdings die Merkmale der Identifikationsstruktur unmittelbar durch (Radarstrahlung reflektierende) Profilabschnitte 25 gebildet sind, die keine speziellen, der Unterscheidung der Identifikationsstruktur dienenden Reflexionseigenschaften aufweisen, nachdem die unterschiedlichen Identifikationsstrukturen einem gemeinsamen Muster möglicher vorhandener Merkmale folgen, wie im Hinblick auf Fig. 6 näher erläutert werden soll. Dort ist eine Aufsicht auf den Radarsensor 2 in der Halterung 11 gezeigt, wobei drei Profilabschnitte 25 der Halterung 11 vorgesehen sind, die mithin einer bestimmten Anordnung von Merkmalen 26 entsprechen, wie im unteren Bereich der Fig. 6 dargestellt ist. Die Anordnung der Merkmale 26 der Identifikationsstruktur, die dort im speziellen Fall gezeigt ist, entspricht dem vollständigen vorbestimmten Muster 27, dem alle Identifikationsstrukturen der Einbauplätze 3 folgen. Die Identifikationsstrukturen unterscheiden sich mithin letztlich nur darin, welche der Merkmale 26 tatsächlich vorhanden sind, das bedeutet, welche der Profilabschnitte 25 an den speziellen Halterungen an den Einbaupositionen 3 tatsächlich realisiert wurden. Auf diese Weise lässt sich vorliegend eine 3 Bit-Information kodieren, die ersichtlich für die hier acht Einbaupositionen 3 ausreichend ist; das vorbestimmte Muster 27, auf dessen Grundlage die unterschiedlichen Identifikationsstrukturen geschaffen werden, kann bei einer größeren Zahl von Einbaupositionen 3 selbstverständlich erweitert werden, insbesondere als ein vier Merkmale 26 in einer Rechteck-Anordnung beschreibendes vorbestimmtes Muster 27.

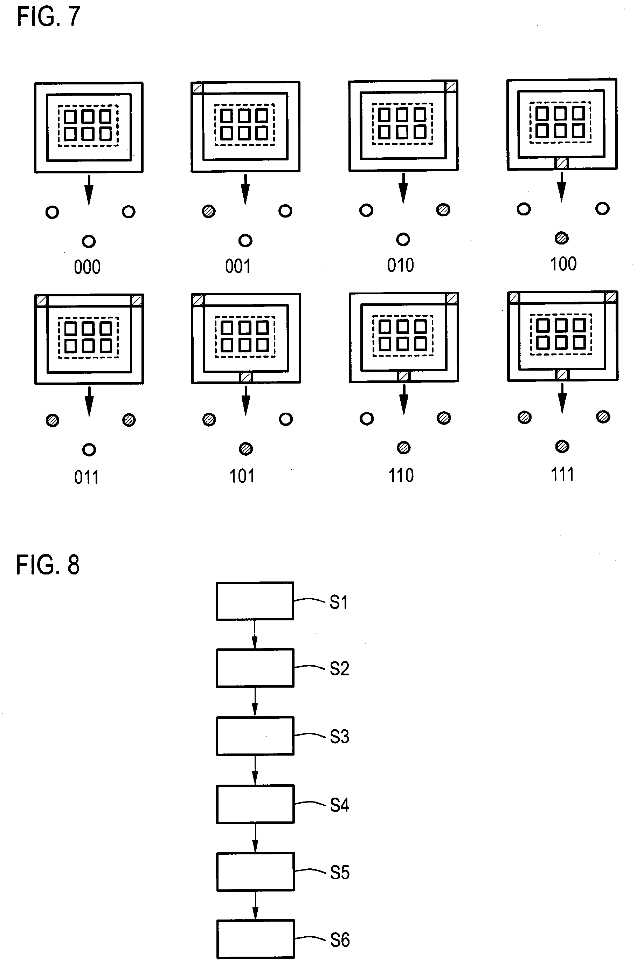

Fig. 7 zeigt schematisch die sich ergebenden Identifikationsstrukturen unter Verwendung des vorbestimmten Musters 27 der Fig. 6. Ist keines der Merkmale 26, mithin keiner der Profilabschnitte 25 vorhanden, ergibt sich die links oben in Fig. 7 dargestellte Situation, wobei nicht schraffierte Kreise das Fehlen von Merkmalen anzeigen, schraffierte Kreise jedoch das Vorhandensein eines Merkmals 26. Die Radardaten zeigen mithin im Fall links unten der Fig. 7 keine Positionen detektierter Merkmale 26 an, was einer binären Kodierung "000" entsprechen kann.

Im rechts daneben angeordneten Fall ist in der Identifikationsstruktur das linke obere Merkmal 26 vorhanden, die anderen Merkmale 26 des vorbestimmten Musters 27 fehlen jedoch weiterhin, so dass hierdurch die Kodierung "001" gegeben ist, bis hin zum Vorhandensein aller Merkmale 26 des vorbestimmten Musters 27, in Fig. 7 rechts unten dargestellt, was der Kodierung "111" entsprechen würde.

Ist die Anordnung der Merkmale 26 auf diese Art und Weise bekannt bzw. kann aus den Positionen in den Radardaten abgeleitet werden, kann den entsprechenden Kodierungen mithin die Einbauposition 3 zugeordnet werden. Ein Ausführungsbeispiel des erfindungsgemäßen Verfahrens, das diese Ausgestaltung nutzt, zeigt Fig. 8, worin in einem Schritt S1 ein Radarsensor 2 an einer Einbauposition 3 verbaut wird und in Betrieb genommen wird. In einem Schritt S2 werden Radardaten der Identifikationsstruktur mit dem Radarsensor 2 aufgenommen. Hierzu kann ein spezieller Betriebsmodus bei Inbetriebnahme des Radarsensors 2 genutzt werden, der die Signale der Nebenkeulen 22 auswertet und daraus die die Identifikationsstruktur beschreibende Radardaten ermittelt, bei der Nutzung des vorbestimmten Musters 27 also entweder die Positionen detektierter Merkmale 26 (welche über den Abstand vom Radarsensor 2 leicht identifizierbar sind) oder gar bereits deren Anordnung.

Die so ermittelten Radardaten werden in einem Schritt S3 an das Steuergerät 5 übermittelt, welches, falls nicht bereits seitens des Radarsensors 2 geschehen, die Kodierung herleitet, beispielsweise "011", wenn die Merkmale 26 links oben und rechts oben detektiert wurden, das Merkmal 26 mittig unten jedoch nicht vorhanden ist. Im Steuergerät 5 ist eine Look-Up-Tabelle abgelegt, in der der Kodierung, also der Anordnung von vorhandenen Merkmalen 26, die Einbauposition 3 beschreibende Konfigurationsparameter abgelegt sind. Eine solche Tabelle kann beispielhaft folgendermaßen aussehen, wobei sich x, y und z auf Richtungen des Koordinatensystems des Kraftfahrzeugs beziehen.

| Kodierung | x | y | z |
|---|---|---|---|
| 000 | 1,2 Meter | -0,5 Meter | 0,5 Meter |
| 001 | 1,2 Meter | 0,0 Meter | 0,5 Meter |
| 010 | 1,2 Meter | 0,5 Meter | 0,5 Meter |
| 011 | 1,0 Meter | -0,5 Meter | 0,5 Meter |
| 100 | 1,0 Meter | 0,5 Meter | 0,5 Meter |
| 101 | -1,2 Meter | -0,5 Meter | 0,5 Meter |
| 110 | -1,2 Meter | 0,0 Meter | 0,5 Meter |
| 111 | -1,2 Meter | 0,5 Meter | 0,5 Meter |

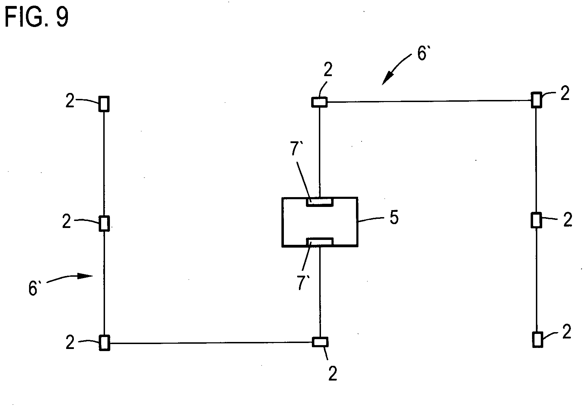

Wird eine andere Verbindungstopologie für die Radarsensoren gewählt, können auch andere Kodierungsmuster (vorbestimmte Muster) gewählt werden, die beispielsweise mit weniger Merkmalen auskommen. Wird beispielsweise eine Topologie wie in der Fig. 9 gewählt, in der das Steuergerät 5 zwei CAN-Schnittstellen 7' für zwei CAN-Busse 6' aufweist, an denen jeweils vier Radarsensoren angeordnet sind, können 2-Bit-Muster mit zwei Merkmalen eingesetzt werden, wobei dann die Leitung, über die die Radardaten erhalten werden, eine weitere Information liefert, die bei der Erkennung der richtigen Einbauposition berücksichtigt wird. In einem solchen Fall sind die Identifikationsstrukturen mithin nur für einen Teil der Einbaupositionen einbaupositionsspezifisch.

Es sei schließlich noch angemerkt, dass die Radardaten seitens des Steuergeräts 5 auch zur Eigenkonfiguration verwendet werden können, beispielsweise, um eine Liste aktiver Radarsensoren 2 zu aktualisieren und dergleichen.

## Patentansprüche

1. Verfahren zum Konfigurieren wenigstens eines an einer von mehreren Einbaupositionen (3) in einem Kraftfahrzeug (1) verbauten Radarsensors (2) hinsichtlich der Einbauposition (3),
**dadurch gekennzeichnet,**
**dass** an jeder Einbauposition (3) wenigstens eine einbaupositionsspezifische, von dem verbauten Radarsensor (2) erfassbare Identifikationsstruktur vorgesehen wird, wobei die Konfiguration des Radarsensors (2) in Abhängigkeit von die Identifikationsstruktur beschreibenden, reflexionsbasierten Radardaten erfolgt.

2. Verfahren nach Anspruch 1,
**dadurch gekennzeichnet,**
**dass** die Identifikationsstruktur durch eine Nebenkeule (22) des Radarsensors (2) erfasst wird.

3. Verfahren nach Anspruch 1 oder 2,
**dadurch gekennzeichnet,**
**dass** als Identifikationsstruktur ein vorbestimmte Reflektionseigenschaften aufweisendes Merkmal und/oder eine Anordnung von in den Radardaten auffindbaren, insbesondere nach einem vorbestimmten Muster (27) angeordnete Merkmalen (26) verwendet wird.

4. Verfahren nach Anspruch 3,
**dadurch gekennzeichnet,**
**dass** verschiedene Einbaupositionen (3) über das Vorhandensein von einzelnen Merkmalen (26) des vorbestimmten Musters (27) identifiziert werden.

5. Verfahren nach Anspruch 3 oder 4,
**dadurch gekennzeichnet,**
**dass** bei in einem Stoßfänger (8) befindlichen Einbaupositionen (3) die Merkmale (26) an dem Stoßfänger (8) ausgebildet sind, insbesondere als in einen Erfassungsbereich (4) oder eine Nebenkeule (22) des Radarsensors (2) einragende Profilabschnitte (12) des Stoßfängers (8).

6. Verfahren nach einem der Ansprüche 3 bis 5,
**dadurch gekennzeichnet,**
**dass** die Merkmale (26) an einer Halterung (11) für den Radarsensor (2) ausgebildet sind.

7. Verfahren nach einem der Ansprüche 3 bis 6,
**dadurch gekennzeichnet,**
**dass** die Radardaten eine Reflektionseigenschaft des Merkmals (26) und/oder eine Position des Merkmals (26) und/oder eine Anordnung mehrerer Merkmale (26) der Identifikationsstruktur umfassen.

8. Verfahren nach einem der vorangehenden Ansprüche,
**dadurch gekennzeichnet,**
**dass** eine Steuereinrichtung (19) des Radarsensors (2) die Radardaten zur Auswahl einer zu verwendenden Version und/oder zur Konfiguration einer Auswertungssoftware auswertet und/oder die Radardaten an ein Steuergerät (5) des Kraftfahrzeugs (2) übermittelt werden.

9. Verfahren nach Anspruch 8,
**dadurch gekennzeichnet,**
**dass** das Steuergerät (5) wenigstens eine Eigenkonfiguration, insbesondere bezüglich einer vorgehaltenen Liste von aktiven Radarsensoren (2), aufgrund der Radardaten vornimmt und/oder nach Auswertung der Radardaten eine zu verwendende Version der Auswertungssoftware und/oder Konfigurationsparameter, insbesondere die Einbauposition (3) des Radarsensors (2) beschreibende Konfigurationsparameter, für die Auswertungssoftware an den Radarsensor (2) zurückübermittelt.

10. Verfahren nach Anspruch 9,
**dadurch gekennzeichnet,**
**dass** beim einem Anschluss von Radarsensoren (2) jeweils eines Teils der Einbaupositionen (3) über eine Leitung, insbesondere einen Bus (6, 6'), an das Steuergerät (5) und einer steuergeräteseitigen Ermittlung der Version der Auswertungssoftware und/oder der Konfigurationsparameter für die Auswertungssoftware die Identifikationsstrukturen nur bezüglich einer der Leitungen einmalig sind.

11. Kraftfahrzeug (1) mit mehreren Einbaupositionen (3) für Radarsensoren (2),
**dadurch gekennzeichnet,**
**dass** an jeder Einbauposition (3) wenigstens eine einbaupositionsspezifische, von den an der jeweiligen Einbauposition (3) verbauten Radarsensoren (2) erfassbare Identifikationsstruktur vorgesehen ist, wobei eine Steuereinrichtung (19) der Radarsensoren (2) und/oder ein Steuergerät (5) des Kraftfahrzeugs (1) zur Konfiguration der Radarsensoren (2) bezüglich der Einbauposition (3) in Abhängigkeit von eine jeweilige Identifikationsstruktur beschreibenden, reflexionsbasierten Radardaten ausgebildet ist.

## Claims

1. Method for configuring at least one built-in radar sensor (2) installed in a motor vehicle (1) on one of several mounting positions (3) with respect to the mounting position (3),
**characterised in**
**that** at each mounting position (3) is provided at least one mounting position-specific identification structure which can be detected by the installed radar sensor (2), wherein the configuration of the radar sensor (2) is carried out depending on reflection-based radar data describing the identification structure.

2. Method according to claim 1,
**characterised in**
**that** the identification structure is detected by means of a side lobe (22) of the radar sensor (2).

3. Method according to claim 1 or 2,
**characterised in**
**that** as identification structure is used a feature having predetermined reflection characteristics and/or an arrangement of features (26) findable in the radar data, in particular disposed according to a predetermined pattern (27).

4. Method according to claim 3,
**characterised in**
**that** various mounting positions (3) are identified via the presence of individual features (26) of the predetermined pattern (27).

5. Method according to claim 3 or 4,
**characterised in**
**that** in the case of mounting positions (3) located in a bumper (8) the features (26) are formed on the bumper (8), in particular as profile portions (12) of the bumper (8) protruding into a detection region (4) or a side lobe (22) of the radar sensor (2).

6. Method according to any of claims 3 to 5,
**characterised in**
**that** the features (26) are formed on a holder (11) for the radar sensor (2).

7. Method according to any of claims 3 to 6,
**characterised in**
**that** the radar data comprise a reflection characteristic of the feature (26) and/or a position of the feature (26) and/or an arrangement of several features (26) of the identification structure.

8. Method according to any of the preceding claims,
**characterised in**
**that** a control device (19) of the radar sensor (2) evaluates the radar data for the selection of a version to be used and/or for the configuration of an evaluation software and/or the radar data are transmitted to a control device (5) of the motor vehicle (2).

9. Method according to claim 8,
**characterised in**
**that** the control device (5) undertakes at least one configuration of its own, in particular with respect to a stored list of active radar sensors (2), on the basis of the radar data and/or after evaluation of the radar data transmits back to the radar sensor (2) a version of the evaluation software to be used and/or configuration parameters, in particular configuration parameters describing the mounting position (3) of the radar sensor (2), for the evaluation software.

10. Method according to claim 9,
**characterised in**
**that** in the case of a connection of radar sensors (2) of in each case one part of the mounting positions (3) via a line, in particular a bus (6, 6'), to the control device (5) and in the case of a control-device-side detection of the version of the evaluation software and/or of the configuration parameters for the evaluation software, the identification structures are unique only with respect to one of the lines.

11. Motor vehicle (1) having several mounting positions (3) for radar sensors (2),
**characterised in**
**that** at each mounting position (3) is provided at least one mounting position-specific identification structure which can be detected by the radar sensors (2) installed at the respective mounting position (3), wherein a control device (19) of the radar sensors (2) and/or a control device (5) of the motor vehicle (1) is designed for the configuration of the radar sensors (2) with respect to the mounting position (3) depending on reflection-based radar data describing a respective identification structure.

## Revendications

1. Procédé de configuration d'au moins un capteur radar (2) installé au niveau d'une de plusieurs positions de montage (3) dans un véhicule automobile (1) en ce qui concerne la position de montage (3),
**caractérisé en ce**
**qu'**au moins une structure d'identification, spécifique à la position de montage, détectable par le capteur radar (2) installé est prévue au niveau de chaque position de montage (3), dans lequel la configuration du capteur radar (2) est effectuée en fonction de données de radar basées sur la réflexion décrivant la structure d'identification.

2. Procédé selon la revendication 1,
**caractérisé en ce**
**que** la structure d'identification est détectée par un lobe secondaire (22) du capteur radar (2).

3. Procédé selon la revendication 1 ou 2,
**caractérisé en ce**
**qu'**une caractéristique présentant des propriétés de réflexion prédéterminées et/ou un agencement de caractéristiques (26), trouvables dans les données de radar, agencées en particulier selon un modèle prédéterminé (27) est utilisé comme structure d'identification.

4. Procédé selon la revendication 3,
**caractérisé en ce**
**que** différentes positions de montage (3) sont identifiées par la présence de caractéristiques (26) individuelles du modèle prédéterminé (27).

5. Procédé selon la revendication 3 ou 4,
**caractérisé en ce**
**que**, pour des positions de montage (3) se trouvant dans un pare-chocs (8), les caractéristiques (26) sont réalisées au niveau du pare-chocs (8), en particulier comme sections de profil (12), pénétrant dans une zone de détection (4) ou un lobe secondaire (22) du capteur radar (2), du pare-chocs (8).

6. Procédé selon l'une quelconque des revendications 3 à 5,
**caractérisé en ce**
**que** les caractéristiques (26) sont réalisées au niveau d'un support (11) pour le capteur radar (2).

7. Procédé selon l'une quelconque des revendications 3 à 6,
**caractérisé en ce**
**que** les données de radar comprennent une propriété de réflexion de la caractéristique (26) et/ou une position de la caractéristique (26) et/ou un agencement de plusieurs caractéristiques (26) de la structure d'identification.

8. Procédé selon l'une quelconque des revendications précédentes,
**caractérisé en ce**
**qu'**un dispositif de commande (19) du capteur radar (2) évalue les données de radar pour la sélection d'une version à utiliser et/ou pour la configuration d'un logiciel d'évaluation et/ou les données de radar sont transmises à un appareil de commande (5) du véhicule automobile (2).

9. Procédé selon la revendication 8,
**caractérisé en ce**
**que** l'appareil de commande (5) entreprend au moins une configuration propre, en particulier par rapport à une liste retenue de capteurs radars (2) actifs, en raison des données de radar et/ou, après l'évaluation des données de radar, retransmet une version à utiliser du logiciel d'évaluation et/ou des paramètres de configuration, en particulier des paramètres de configuration décrivant la position de montage (3) du capteur radar (2), pour le logiciel d'évaluation au capteur radar (2).

10. Procédé selon la revendication 9,
**caractérisé en ce**
**que**, pour un raccord de capteurs radars (2) respectivement d'une partie des positions de montage (3) par le biais d'un câble, en particulier un bus (6, 6'), à l'appareil de commande (5) et une détermination côté appareil de commande de la version du logiciel d'évaluation et/ou des paramètres de configuration pour le logiciel d'évaluation, les structures d'identification sont uniques seulement par rapport à un des câbles.

11. Véhicule automobile (1) avec plusieurs positions de montage (3) pour des capteurs radars (2),
**caractérisé en ce**
**que**, au niveau de chaque position de montage (3), au moins une structure d'identification, spécifique à la position de montage, détectable par les capteurs radars (2) installés au niveau de la position de montage (3) respective est prévue, dans lequel un dispositif de commande (19) des capteurs radars (2) et/ou un appareil de commande (5) du véhicule automobile (1) est réalisé pour la configuration des capteurs radars (2) par rapport à la position de montage (3) en fonction de données de radar basées sur la réflexion décrivant une structure d'identification respective.
